(19) Europäisches Patentamt
European Patent Office
Office européen des brevets

(11) Veröffentlichungsnummer: **0 429 797 A1**

# (12) EUROPÄISCHE PATENTANMELDUNG

(21) Anmeldenummer: **90118766.6**

(22) Anmeldetag: **29.09.90**

(51) Int. Cl.[5]: **C08K 13/02**, C08L 21/00, //(C08K13/02,3:22,5:54), (C08K13/02,3:34,5:54)

(30) Priorität: **20.11.89 DE 3938488**

(43) Veröffentlichungstag der Anmeldung: **05.06.91 Patentblatt 91/23**

(84) Benannte Vertragsstaaten: **AT BE CH DE ES FR GB IT LI LU NL Patentblatt**

(71) Anmelder: **Degussa Aktiengesellschaft**
**Weissfrauenstrasse 9**
**W-6000 Frankfurt am Main 1(DE)**

(72) Erfinder: **Wolff, Siegfried, Dr.**
**Weiherstrasse 28**
**W-5303 Bornheim-Merten(DE)**
Erfinder: **Görl, Udo, Dr.**
**Quittenstrasse 36**
**W-5309 Meckenheim(DE)**

## (54) Verfahren zur Verwendung von N,N'-und N,N',N'-substituierten Silylharnstoffen als Antidegradantien und sie enthaltende Polymermischungen.

(57) Die Erfindung betrifft die Verwendung von N,N'- und N,N',N'-substituierten Silylharnstoffen der allgemeinen Formel

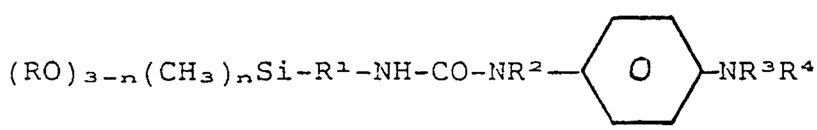

als nichtauswaschbare Antidegradantien in Füllstoffe enthaltenden Polymeren, insbesondere in Kautschuk.

EP 0 429 797 A1

# VERWENDUNG VON N,N - UND N,N′,N′-SUBSTITUIERTEN SILYLHARNSTOFFEN ALS ANTIDEGRADANTIEN UND SIE ENTHALTENDE POLYMERMISCHUNGEN

Die Erfindung betrifft die Verwendung von N,N′- und N,N′,N′-substituierten Silylharnstoffen als Antidegradantien und sie enthaltende Polymermischungen.

Marktübliche Antidegradantien, die in der Kunststoff-und kautschukverarbeitenden Industrie eingesetzt werden, basieren in der Regel auf mehrwertigen aromatischen Aminen der folgenden allgemeinen Formel

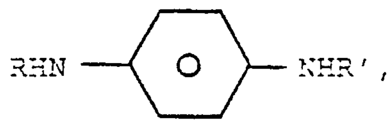

wobei bekannt ist (1) , daß die p-Phenylendiamine die zur Zeit wirksamsten Schutzmittel gegen Ermüdung, Hitzealterung und Ozoneinfluß darstellen.

Ein prinzipieller Nachteil dieser Substanzen liegt in der Tatsache begründet, daß die Konzentration dieser Schutzstoffe bereits bei der Verarbeitung, besonders aber während des Gebrauchs des fertigen Artikels, bedingt durch deren Flüchtigkeit, Auswaschung durch Wasser und Lösungsmittel und Migration - (2) (3) , so stark abnimmt, daß ein optimaler Langzeitschutz nicht gewährleistet ist.

Hinzu kommt die Notwendigkeit, Alterungsschutzstoffe aus ökologischen Gründen im Vulkanisat zu halten und dadurch eventuelle gesundheitliche Gefahren für die in Kontakt mit diesem Polymerisaten kommenden Personen zu mindern.

Diese Gründe insgesamt bewirken seit Jahren eine verstärkte Entwicklung, die darauf abzielt, Antidegradantien im Polymerisat zu halten, ohne deren Wirksamkeit herabzusetzen. Als Möglichkeit hierzu wurde u.a. eine Erhöhung des Molekulargewichts und eine Anbindung der Antidegradantien an die Polymerkette oder an eine Trägersubstanz untersucht, was jedoch zu einem Nachlassen der Schutzwirkung führte (B. T. Ashworth, P. Hill in Developments in Rubber Technology-1, Applied Science Publishers London 199, S. 227 - 247).

Es wurde nun gefunden, daß sich N,N′- und N,N′,N′-substituierte Silylharnstoffe der allgemeinen Formel (I)

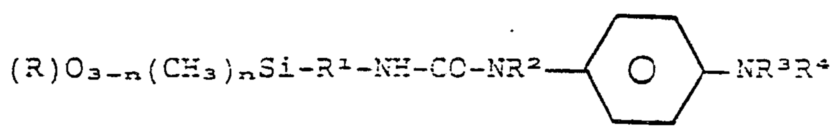

(I),

in der bedeuten:
n = 0, 1 oder 2,
R = $C_1$ - $C_8$ Alkyl, linear oder verzweigt,
Phenyl, $C_5$ - $C_6$ Cycloalkyl
$R^1$ = $-(CH_2)_3-$,

(1) G.P. Langner, Th. Kempermann, O. Rosenthal, "Kautschuk und Gummi, Kunststoffe 32, 81 (1979)

(2) Th. Kempermann, W. Redetzy, H.W. Engels, "Kautschuk und Gummi, Kunststoffe 40, 1168 (1987),

(3) S.N. Charkravarty, S.K. Mastafi, R.M. Pandit, P. Svidhaven, P,K. Pausare, "Kautschuk und Gummi, Kunststoffe 36, 22 (1983).

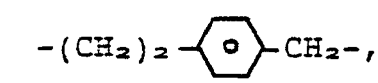

$R^2$, $R^3$, $R^4$: Wasserstoff,
$R^2$, $R^3$, $R^4$: gleich oder verschieden,
$C_1$ - $C_{18}$ Alkyl, linear oder verzweigt, $C_5$ - $C_8$ Cycloalkyl,
$C_1$ - $C_3$ Alkyl, endständig substituierte durch eine Amino-, Thio- oder Cyanogruppe,
$-(C_2H_4NH)_mH$ mit m: 2 oder 3,
$C_3$-$C_{18}$ Alkenyl, linear oder verzweigt,
Benzyl, Phenyl, Naphthyl, Pyridyl, Triazyl, gegebenenfalls ein- oder mehrfach substituiert durch eine Amino-, Hydroxyl-, Thio-, $C_1$-$C_4$-Alkoxy-, $C_1$-$C_4$-Alkyl, -Nitro- oder Carboxylgruppe, bei Anwesenheit von silikatischen oder oxidischen Füllstoffen und Reaktion der Verbindungen gemäß Formel I über die Trialkoxysilylgruppe(n) mit den OH-Gruppen der Füllstoffoberfläche, hervorragend als nichtauswaschbare Antidegradantien in Polymeren eignen.

Die Verbindungen gemäß Formel (I) werden nach dem in der EP-PS 0 169 992 beschriebenen Verfahren hergestellt, indem man die Lösung einer sekundären oder teriären Aminoverbindung in einem aprotischen, polaren organischen Lösungsmittel zunächst mit der äquimolaren Menge an Alkalicyanat umsetzt und anschließend mit der äquimolaren Menge eines Halogensilans reagieren läßt.

Unter Polymeren sind zu verstehen Duroplaste, wie z. B. Phenolharze, Polyesterharze, die z. B. durch Reaktion von Ethylenglykol, Maleinsäure oder -anhydrid mit oder ohne Styrolzusatz gebildet werden, oder Epoxyharze, aber auch Thermoplaste, wie z. B. Polyethylen, Polypropylen, Copolymere von Ethylen und Propylen, Polyvinylchlorid, Polyacrylnitril und ähnliche.

Die Verbindungen gemäß Formel (I) werden bevorzugt in den allgemein bekannten Kautschukmischungen auf der Basis von Naturkautschuk (NR), Isoprenkautschuk (IR), Styrol-Butadien-Kautschuk (SBR), Isobutylen-Isoprenkautschuk (IIR), Ethylen-Propylen-Terpolymer (EPDM), Nitrilkautschuk (NBR), halogenhaltiger Kautschuke und auch epoxidierter Naturkautschuke (ENR) sowie deren Verschnitten eingesetzt.

Neben den silikatischen und oxidischen natürlichen und synthetischen Füllstoffen (z.B. Clays, Kieselkreide, Kreide, Talke, gefällte und pyrogene Kieselsäuren, Aluminiumoxidhydrate, Calciumcarbonat etc.), die für eine Anbindung der erfindungsgemäßen Verbindung notwendig sind, können die Mischungen zusätzlich die in der Gummiindustrie üblicherweise eingesetzten Gummiruße enthalten.

Die Organosiliciumverbindungen gemäß Formel (I) werden entweder separat oder bereits an Füllstoff gebunden, eingesetzt.

Dabei kann es sich um eine einfache Abmischung handeln oder aber um einen modifizierten Füllstoff, bei dem die Reaktion zwischen den Alkoxygruppen der Organosiliciumverbindung und der Oberfläche des Füllstoffes bereits vor Zugabe zur Kautschukmischung stattgefunden hat.

Verfahren zur Modifizierung von Füllstoffoberflächen sind allgemein bekannt und können unter Zusatz von organischen Lösungsmitteln oder Wasser ( DE-PS 34 37 473, DE-OS 27 43 663) oder auch lösungsmittelfrei durchgeführt werden (DE-OS 29 05 851 = US-PS 4,141,751).

Die Konzentration der Organosiliciumverbindung beläuft sich auf bis zu $3{,}5 \cdot 10^{-6}$ Mol Trialkoxysilylgruppen auf einen Quadratmeter Füllstoffoberfläche.

Dabei ist die Konzentration der Organosiliciumverbindungen so einzustellen, daß sie insgesamt 0,5 bis 10 Gew.-Teile, bevorzugt 1,5 bis 3 Gew.-Teile, bezogen auf 100 Gew.-Teile des polymeren Anteils, ausmacht.

Daneben enthalten die Polymeren die üblichen Zusatzstoffe wie z.B. Weichmacher, gegebenenfalls weitere Antidegradantien, Farbstoffe, Verarbeitungshilfsmittel und gegebenenfalls weitere Organosiliciumverbindungen wie z.B. Bis-(3-triethoxysilylpropyl)tetrasulfan, $\gamma$ -Chlorpropyltriethoxysilan, $\gamma$-Mercaptopropyltrimethoxysilan, Vinyltrialkoxysilane, Aminopropyltrialkoxysilane und deren Verschnitte in einer Menge von 0,1 bis 20 Gew.-Teile, bevorzugt 1 bis 10 Gew.-Teile je 100 Gew.-Teilen Füllstoff.

Die Herstellung der Polymermischungen erfolgt auf bekannte Art und Weise.

Kautschukmischungen enthalten zusätzlich

- übliche in der Kautschukindustrie verwendete Vulkanisationsbeschleuniger (z.B. Sulfenamide, Triazinbeschleuniger , Thiurame) allein oder im Gemisch, in, Mengen von 0,1 bis 10 Gew.-Teile, bezogen auf 100 Gew.-Teile Kautschuk.
- Vulkanisationsverzögerer wie z.B. Vulkalent E, PVI, ebenfalls in Mengen von 0,1 bis 2 Gew.-Teile, bezogen aus 100 Gew.-Teile Kautschuk.
- ZnO und Stearinsäure als Promotoren der Vulkanisation in Mengen von 0,5 bis 10 Gew.-Teile auf 100

Gew.-Teile Kautschuk,
- zusätzlich konventionelle, in der Kautschukindustrie verwendete Alterungs-, Ozon-, Ermüdungsschutzmittel wie z.B. IPPD, TMQ sowie auch Wachse als Lichtschutzmittel und deren Verschnitte,
- beliebige Weichmacher wie z.B. aromatische, naphthenische, paraffinische, synthetische Weichmacher und deren Verschnitte
- gegebenenfalls Schwefel in einer Menge von 0,1 bis 10 Gew.-Teile auf 100 Gew.-Teile Kautschuk.

Die Mischungsherstellung erfolgt in bekannter Art und Weise in einem ein- oder mehrstufigen Verfahren, indem z.B. zunächst in einem Innenmischer bei einer Durchflußtemperatur zwischen 55 und 65 °C der Kautschuk bzw. ein Kautschukgemisch auf die gewünschte Viskosität abgebaut wird und anschließend die übrigen Mischungsbestandteile wie z.B. Füllstoffe, die erfindungsgemäßen Verbindungen, Aktivatoren und Weichmacher, nicht jedoch Beschleuniger und Schwefel, beigemischt werden. Letztere werden anschließend entweder auf der Walze oder in einem Kneter bei niedrigen Temperaturen, um vorzeitiges Anvulkanisieren zu vermeiden, zur Vormischung gegeben.

Der Anwendungsbereich der nichtauswaschbaren Antidegradantien erstreckt sich auf Kautschukmischungen, wie sie üblicherweise zum Reifenbau und bei der Herstellung technische Artikel, wie zum Beispiel Mischungen für Fördergurte, Keilriemen, Formartikel, Schläuche mit und ohne Einlagen, Walzengummierungen, Auskleidungen, Spritzprofile, Freihandartikel, Folien, Schuhsohlen und Oberteile, Kabel, Vollgummireifen und deren Vulkanisate, verwendet werden.

Ein Vergleich der Alterungsschutzwirkung der erfindungsgemäß eingesetzten Verbindungen mit den heute in der Kautschukindustrie als Antidegradantien häufig verwendeten Verbindungen (z.B. Vulkanox® 4010 NA) zeigt, daß bei den erfindungsgemäßen Polymermischungen die Schutzwirkung, auch beim Ozonschutz, nicht nachläßt.

Durch die stark herabgesetzte Migration ergibt sich die Möglichkeit, aneinandergrenzende unterschiedliche Kautschukmischungen, wie man sie z.B. in allen Reifen findet, mit dem für die jeweilige Mischung geeignetsten Schutzmittel zu versetzen, ohne daß dabei die Gefahr besteht, daß die für die unterschiedlichen Mischungen eingesetzten Schutzmittel sich durch Migration vermischen, und damit der für die jeweilige Mischung gewählte optimale Schutz herabgesetzt wird.

Die erfindungsgemäß verwendeten Verbindungen haben zudem den Vorteil, daß sie im Vergleich zu den kommerziellen Alterungsschutzmitteln eine deutliche Verbesserung des gummitechnischen Wertebildes hervorrufen. So führt deren Zugabe zur Kautschukmischung zu einer deutlichen Erhöhnung der Vernetzungsausbeute und bedingt hierdurch eine Erhöhung des Moduls 300, der Zugfestigkeit und der Shore-A-Härte, zudem wird die Anvulkanisationszeit verlängert. Alle diese Eigenschaftsverbesserungen führen dazu, daß unter Umständen andere Mischungsbestandteile, wie z.B. Beschleuniger, Schwefel und Silane, geringer dosiert werden können.

Die folgenden Beispiele belegen die vorteilhafte Wirkung der erfindungsgemäß eingesetzten Verbindung.

| Prüfnormen für die Anwendung | | |
|---|---|---|
| | Prüfmethode | Einheit |
| $D_{max}$-$D_{min}$ | DIN 53 529 | Nm |
| Scorchzeit | ASTM D 2084 | min |
| Mooney-Prüfung | 53523/524 | ME(Mooney-Einheiten) |
| Zugfestigkeit, Bruchdehnung | DIN 53 504 | MPa |
| Spannungswert (Modul 300) | | |
| Shore-A-Härte | DIN 53 505 | |
| Ermüdungstest (De Mattia) | ASTM D 813 | |

Für den Nachweis der Nichtauswaschbarkeit der erfindungsgemäßen Verbindungen wurde zunächst eine dynamische Ozonprüfung durchgeführt, indem die Probekörper (Maße analog stat. Ozonprüfung nach DIN 53 509) bei einer Temperatur von 40 °C, einer Luftfeuchtigkeit von 40 % und einer 20 %-igen dynamischen Dehnung (Frequenz = 0,5 Hz) mit einer Ozonkonzentration von 200 pphm begast wurden. Gemessen wurde hierbei der Kraftabfall in Prozent der Proben nach 25 h und 50 h. Anschließend werden neue Probekörper, jedoch mit gleicher Mischungszusammensetzung 16 Tage in 40 °C warmen wasser gelagert und nach dieser Zeit erneut der Kraftabfall bei obigen Bedingungen gemessen. Der resultierende Kraftabfall als Maß für die Ozonschutzwirkung vor und nach der Wasserlagerung ist hierbei ein Parameter

für die Nichtauswaschbarkeit der Verbindungen gemäß Formel I.

In den Anwendungsbeispielen werden folgende Namen und Abkürzungen benutzt, deren Bedeutung hier aufgeführt wird.

| | |
|---|---|
| SMR 5 | Standard Malaysian Rubber (Naturkautschuk) |
| CORAX(R)N 220 | Ruß, Oberfläche (BET) 120 $m^2/g$ (Degussa) |
| Ultrasil(R)VN 3 | gefällte Kieselsäure mit einer Oberfläche von 175 $m^2/g$ (Degussa) |
| Vulkanox(R)4010 NA | N-Isopropyl-N'-phenyl-p-phenylen-diamin (IPPD) |
| Vulkanox(R)4030 | N,N'-Bis-(1,4-dimethylpentyl)-p-phenyl-diamin |
| Vulkacit(R)MOZ | Benzthiazyl-2-sulfenmorpholid |
| TMQ | 2,2,4-Trimethyl-1,2-dihydro-chinolin |
| Vulkalent(R)E | 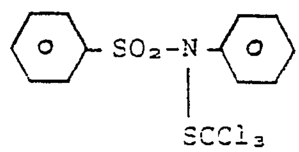 |
| PVI | N-(Cyclohexylthio)phthalimid |

SL 33-3-8 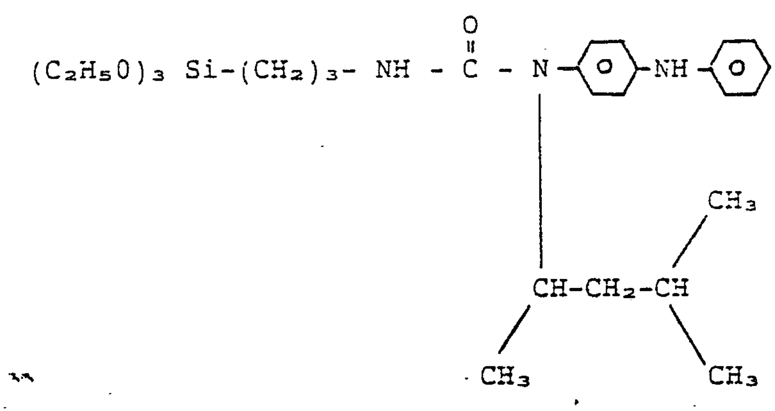

SL 33-3-9 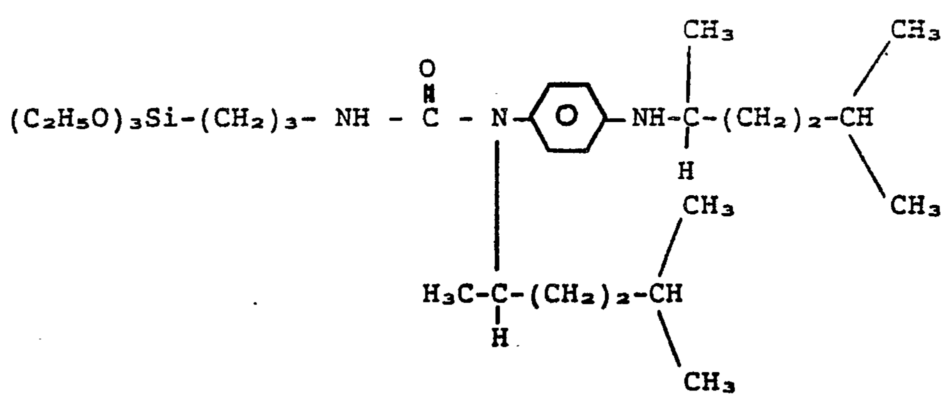

SL 33-3-10 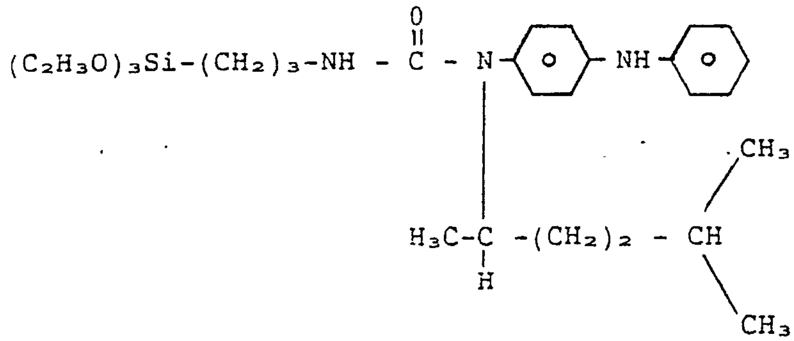

SL 33-3-17 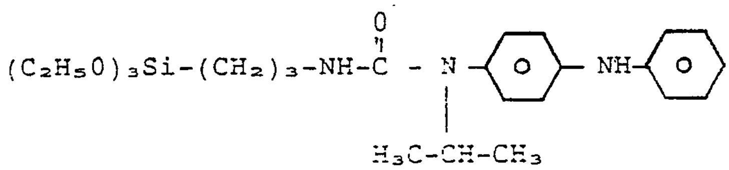

| Beispiel 1: | | | | |
|---|---|---|---|---|
| Vergleich des gummitechnischen Wertebildes und der Ozonschutzwirkung von Vulkanox 4030 und SL 33-3-9 | | | | |
| SMR 5 | | 100 | 100 | 100 |
| CORAX N 220 | | 30 | 30 | 30 |
| Ultrasil VN 3 | | 20 | 20 | 20 |
| Zinkoxid | | 3 | 3 | 3 |
| Stearinsäure | | 2 | 2 | 2 |
| Vulkanox 4030 | | - | 2,5 | - |
| SL 33-3-9 | | - | - | 2,5 |
| Vulkacit MOZ | | 1,5 | 1,5 | 1,5 |
| Schwefel | | 2 | 2 | 2 |
| ML (1 + 4) bei 100 °C | | 110 | 114 | 104 |
| Vulkanisationstemp. 145 °C<br>Vulkanisatdaten bei 145 °C, t 95% | | | | |
| Dmax-Dmin | Nm | 6,31 | 6,43 | 7,89 |
| t 10 % | min | 11,3 | 6,5 | 9,0 |
| Zugfestigkeit | MPa | 16,3 | 19,3 | 20,9 |
| Modul 300 % | MPa | 8,0 | 7,8 | 9,6 |
| Shore-A-Härte | | 58 | 59 | 62 |
| Dynamische Ozonprüfung | | | | |
| Ozonkonzentration: | 200 pphm | | | |
| Temperatur: | 40 °C | | | |
| Luftfeuchtigkeit: | 40 % | | | |
| Dehnung: | 20 % (0,5 Hz) | | | |
| Vor dem Auswaschen | | | | |
| Kraftabfall nach 25 h % | | 18 | 8 | 10 |
| Kraftabfall nach 50 h % | | 26 | 14 | 15 |
| Nach dem Auswaschen (16 Tage/ 40 °C $H_2O$) | | | | |
| Kraftabfall nach 25 h % | | 17 | 19 | 13 |
| Kraftabfall nach 50 h % | | 24 | 27 | 17 |

| Beispiel 2: | | | | |
|---|---|---|---|---|
| Vergleich des gummitechnischen Wertebildes und der Ozonschutzwirkung von Vulkanox 4010 NA und SL 33-3-17 | | | | |
| SMR 5 | | 100 | 100 | 100 |
| CORAX N 220 | | 30 | 30 | 30 |
| Ultrasil VN 3 | | 20 | 20 | 20 |
| Zinkoxid | | 3 | 3 | 3 |
| Stearinsäure | | 2 | 2 | 2 |
| Vulkanox 4010 NA | | - | 2,5 | - |
| SL 33-3-17 | | - | - | 2,5 |
| Vulkacit MOZ | | 1,5 | 1,5 | 1,5 |
| Schwefel | | 2 | 2 | 2 |
| ML (1 + 4) bei 100 °C | | 110 | 115 | 111 |
| Vulkanisationstemp. 145 °C<br>Vulkanisatdaten bei 145 °C, t 95% | | | | |
| Dmax-Dmin | Nm | 6,31 | 6,31 | 7,75 |
| t 10 % | min | 11,3 | 7,7 | 10,0 |
| Zugfestigkeit | MPa | 16,3 | 7,6 | 21,5 |
| Modul 300 % | MPa | 8,0 | 7,6 | 10,1 |
| Bruchdehnung | % | 460 | 470 | 500 |
| Shore-A-Härte | | 58 | 58 | 63 |
| Dynamische Ozonprüfung | | | | |
| Ozonkonzentration: | 200 pphm | | | |
| Temperatur: | 40 °C | | | |
| Luftfeuchtigkeit: | 40 % | | | |
| Dehnung: | 20 % (0,5 Hz) | | | |
| Vor dem Auswaschen | | | | |
| Kraftabfall nach 25 h % | | 18 | 12 | 12 |
| Kraftabfall nach 50 h % | | 26 | 18 | 17 |
| Nach dem Auswaschen (16 Tage/ 40 °C $H_2O$) | | | | |
| Kraftabfall nach 25 h % | | 17 | 15 | 10 |
| Kraftabfall nach 50 h % | | 24 | 22 | 15 |

| Beispiel 3: | | | | | |
|---|---|---|---|---|---|
| Vergleich des gummitechnischen Wertebildes und der Alterungsschutzwirkung von Vulkanox 4010 NA, SL 33-3-8 und SL 33-3-10 | | | | | |
| SMR 5 | | 100 | 100 | 100 | 100 |
| CORAX N 220 | | 40 | 40 | 40 | 40 |
| Ultrasil VN 3 | | 10 | 10 | 10 | 10 |
| Zinkoxid | | 3 | 3 | 3 | 3 |
| Stearinsäure | | 2 | 2 | 2 | 2 |
| Vulkanox 4010 NA | | - | 2,5 | - | - |
| SL 33-3-8 | | - | - | 2,5 | - |
| SL 33-3-18 | | - | - | - | 2,5 |
| Vulkacit MOZ | | 1,7 | 1,7 | 1,7 | 1,7 |
| Schwefel | | 1,8 | 1,8 | 1,8 | 1,8 |
| Vulkanisationstemp. 160° C<br>Vulkanisatdaten bei 160° C, t 95% | | | | | |
| Dmax-Dmin | Nm | 9,88 | 9,00 | 9,83 | 9,68 |
| Zugfestigkeit | MPa | 22,7 | 24,7 | 21,5 | 23,8 |
| Modul 300 % | MPa | 12,5 | 9,9 | 11,5 | 11,3 |
| Bruchdehnung | % | 460 | 550 | 460 | 510 |
| Shore-A-Härte | | 64 | 62 | 65 | 64 |
| Alterung 3 Tage/ 100° C (DIN 53 508) | | | | | |
| Abfall in | | | | | |
| Zerreißfestigkeit | % | 44 | 31 | 14 | 15 |
| Bruchdehnung | % | 56 | 43 | 40 | 40 |

| Beispiel 4: | | | |
|---|---|---|---|
| Vergleich des gummitechnischen Wertebildes und der Ermüdungsschutzwirkung von SL 33-3-9 gegenüber einer ungeschützten Probe | | | |
| SMR 5 | | 100 | 100 |
| CORAX N 220 | | 40 | 40 |
| Ultrasil VN 3 | | 10 | 10 |
| Zinkoxid | | 3 | 3 |
| Stearinsäure | | 2 | 2 |
| SL 33-3-9 | | - | 2,5 |
| Vulkacit MOZ | | 1,7 | 1,7 |
| Schwefel | | 1,8 | 1,8 |
| Vulkanisationstemp. 160 °C | | | |
| Vulkanisatdaten bei 160 °C, t 95% | | | |
| Dmax-Dmin | Nm | 9,88 | 9,62 |
| Modul 300 % | MPa | 12,5 | 11,6 |
| Shore-A-Härte | | 64 | 64 |
| Ermüdungstest nach De Mattia (ASTM DX 813) | | | |
| Rißwachstum nach Kilocyclen mit Einstich | | | |
| 2 - 4 mm | | 1,2 | 1,5 |
| 4 - 8 mm | | 1,7 | 2,6 |
| 8 - 12 mm | | 3,2 | 4,8 |
| Bruch | | 12,4 | 21,9 |

Die Beispiele 1 und 2 zeigen, daß die erfindungsgemäßen Verbindungen sowohl gummitechnisch (höhere Vernetzungsausbeute, längere Anvulkanisationszeit, höhere Zerreißfestigkeit, höherer Modul 300 % und höhere Shore-A-Härte) als auch bezüglich der Nichtauswaschbarkeit den herkömmlichen Alterungsschutzmitteln überlegen sind.

Beispiel 3 zeigt, daß die erfindungsgemäßen Verbindungen neben dem besseren gummitechnischen Wertebild auch bei der Heißluftalterung günstigere Werte ergeben als das kommerzielle Vulkanox 4010 NA.

Beispiel 4 zeigt, daß die erfindungsgemäßen Verbindungen im Vergleich in einer ungeschützten Probe einen guten Ermüdungsschutz ergeben.

## Ansprüche

1. Verwendung von N,N'- und N,N',N' -substituierten Silylharnstoffen gemäß der allgemeinen Formel

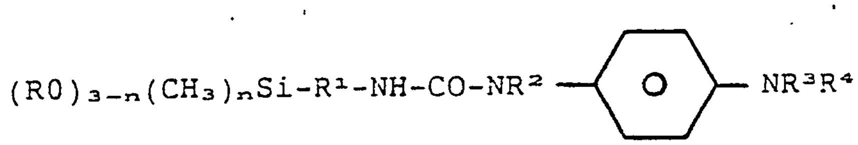

(I)

in der bedeuten:
n = 0,1 oder 2,
R = $C_1$ - $C_6$ Alkyl, linear oder verzweigt, Phenyl, $C_5$ - $C_6$ Cycloalkyl,
$R^1$ = - $(CH_2)_3$ -,

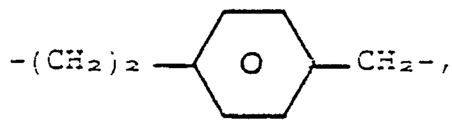

$R^2$, $R^3$, $R^4$: Wasserstoff,
$R^2$, $R^3$, $R^4$: gleich oder verschieden,
$C_1$ - $C_{18}$ Alkyl, linear oder verzweigt, $C_5$ - $C_8$ Cycloalkyl, $C_1$ - $C_3$ Alkyl, endständig substituierte durch eine Amino-, Thio- oder Cyanogruppe,
$-(C_2H_4NH)_mH$ mit m: 2 oder 3,
$C_2$-$C_{18}$ Alkenyl, linear oder verzweigt,
Benzyl, Phenyl, Naphthyl, Pyridyl, Triazyl, gegebenenfalls ein- oder mehrfach substituiert durch eine Amino-, Hydroxyl-, Thio-, $C_1$ - $C_4$-Alkyl, $C_1$-$C_4$-Alkoxy-, Nitro- oder Carboxylgruppe als Antidegradantien in silikatische oder oxidische Füllstoffe enthaltenden Polymeren.

2. Polymermischungen, enthaltend silikatische oder oxidische Füllstoffe und 0,5 bis 10 Gew.-Teile eines oder mehrerer N,N′- oder N,N′,N′-substituierten(r) Silylharnstoffe(s) gemäß Formel I.

3. Mischungen gemäß Anspruch 2, dadurch gekennzeichnet, daß sie sowohl silikatischen Füllstoff als auch Ruß sowie nur Ruß enthalten.

4. Mischungen gemäß Anspruch 2, dadurch gekennzeichnet, daß das Polymere ein Duroplast oder ein Thermoplast ist.

5. Mischungen gemäß Anspruch 2, dadurch gekennzeichnet, daß das Pclymere aus einem oder mehreren natürlichen und/oder synthetischen vulkanisierbaren Kautschuken besteht.

6. Mischungen gemäß Anspruch 2, dadurch gekennzeichnet, daß die erfindungsgemäßen Verbindungen direkt, in Abmischung mit Ruß oder Kieselsäure oder bereits als Umsetzungsprodukt zwischen Ruß oder Kieselsäure, d. h. auf dem Füllstoff chemisch gebunden, der Mischung zugesetzt werden.

Europäisches Patentamt

# EUROPÄISCHER RECHERCHENBERICHT

Nummer der Anmeldung

EP 90 11 8766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0169992 (DEGUSSA AKTIENGESELLSCHAFT)<br>----- | | C08K13/02<br>C08L21/00<br>//(C08K13/02, 3:22,5:54)<br>(C08K13/02, 3:34,5:54) |
| | | | **RECHERCHIERTE SACHGEBIETE (Int. Cl.5)** |
| | | | C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 25 FEBRUAR 1991 | HOFFMANN K.W. |

1

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)